# EUROPÄISCHE PATENTSCHRIFT

(11) **EP 2 089 327 B1**
(45) Veröffentlichungstag und Bekanntmachung des Hinweises auf die Patenterteilung: **18.08.2010**
(21) Anmeldenummer: 07803419.6
(22) Anmeldetag: 12.09.2007
(51) Int. Cl.: C02F 1/54, C02F 9/00, C02F 101/30, C02F 101/00

(54) **VERFAHREN ZUR ABTRENNUNG VON RUSS AUS EINEM ABWASSERSTROM**
PROCESS FOR SEPARATING OFF CARBON BLACK FROM A WASTEWATER STREAM
PROCÉDÉ DE SÉPARATION DE LA SUIE D'UN COURANT D'EAUX USÉES

(30) Priorität: 28.09.2006 EP 06121415
(43) Veröffentlichungstag der Anmeldung: 19.08.2009
(73) Patentinhaber: BASF SE, 67056 Ludwigshafen (DE)
(72) Erfinder: BÖHM, Achim, 67227 Frankenthal (DE); SCHMITZ-BÄDER, Petra, 67227 Frankenthal (DE)
(86) Internationale Anmeldenummer: PCT/EP2007/059555
(87) Internationale Veröffentlichungsnummer: WO 2008/037588

(56) Entgegenhaltungen:
- EP-A- 0 096 244
- EP-A- 0 213 402
- EP-A- 0 286 872
- EP-A- 0 441 209
- DD-A1- 234 851

## Beschreibung

Die vorliegende Erfindung betrifft ein verbessertes Verfahren zur Abtrennung von Ruß aus einem Abwasserstrom, welcher bei der Herstellung von Acetylen anfällt, wobei der Ruß zum größten Teil in fein verteiltem Zustand vorliegt.

Acetylen wird industriell unter anderem nach dem von der BASF entwickelten Verfahren hergestellt, das auf partieller Oxidation von Kohlenwasserstoffen (bevorzugt Erdgas) mit Sauerstoff beruht. Es ist beispielsweise in der US 5,824,834 und in "Ullmann's Encyclopedia of Industrial Chemistry, Sixth Edition, 2000, Electronic Release, Chapter 4.2.1" beschrieben.

Die beiden Einsatzstoffe Kohlenwasserstoff und Sauerstoff werden zuerst vorgewärmt, bei Einsatz von Erdgas auf ca. 500 bis 650°C, dann werden sie gemischt und erst danach im Feuerraum in einer Flamme umgesetzt, die durch den sogenannten Brennerblock stabilisiert wird. Vorwärmung und -mischung sind für hohe Acetylenausbeuten erforderlich.

Die Flammenreaktion bei Temperaturen über etwa 1500°C wird durch Eindüsen von Wasser nach wenigen Millisekunden gequencht, d.h. die sehr schnelle Abkühlung auf ca. 90°C bricht die Radikal-Kettenreaktion in der Flamme ab. Hierdurch wird der Abbau des thermodynamisch instabilen Zwischenprodukts Acetylen verhindert. Das Reaktionsprodukt ist das sogenannte Spaltgas, das ein Gemisch aus Acetylen, Roh-Synthesegas (hauptsächlich H₂ und CO), Wasserdampf und Nebenprodukten ist. Eines der Nebenprodukte hierbei ist Ruß. Vor der Kompression wird das Spaltgas üblicherweise auf ca. 30-50°C gekühlt, um den Großteil des Wasserdampfes zu kondensieren und dadurch die zu komprimierende Gasmenge zu reduzieren.

Der als Nebenprodukt gebildete Ruß erweist sich in den nachfolgenden Prozessstufen als störend und zur Steigerung der Effektivität des Verfahrens ist man daher bemüht, ihn von dem Spaltgas abzutrennen.

Die Abtrennung erfolgt vorwiegend durch Waschen des rußhaltigen Gases mit Wasser, wobei je nach Verfahrensführung ein Abwasser - oft auch "Rußwasser" genannt - mit etwa 0,1 bis 3 Gew.-% Rußgehalt anfällt. Als besonders problematisch erweist sich dabei, dass der Ruß zum größten Teil in fein verteiltem Zustand vorliegt, die Größe der Rußpartikel liegt üblicherweise in einem Bereich von wenigen Nanometern bis Millimetern. Die in der Hochtemperaturzone der Acetylensynthese entstehenden Primärpartikel haben einen Durchmesser von 20 bis 300 nm. Diese Primärpartikel können je nach Verfahrensbedingungen in der Acetylensynthese zu bis zu 1 mm großen Partikeln, in der Regel 0,001 bis 0,05 mm großen Partikeln agglomerieren. Die Rußpartikel können im Rußwasser suspendiert sein oder auch vom Wasser unbenetzt auf der Oberfläche schwimmen. Weitere Inhaltsstoffe des zu reinigenden Abwassers können Kohlenwasserstoffe und anorganische Salze wie Natriumsalze sein. Natronlauge wird in der Regel zugesetzt, um organischer Säuren, die im Prozess entstehen, zu neutralisieren und um so Korrosion zu vermeiden. Hierdurch liegt der pH-Wert meist im Bereich 7 bis 10,5.

Die direkte Abtrennung der Rußpartikel aus dem Abwasser der Acetylenherstellung mittels Filtrationsapparaten gestaltet sich auf Grund der geringen Partikelgröße und der feinen Verteilung des Rußes bei den bekannten Verfahren als aufwändig und hinsichtlich der Effektivität unbefriedigend. In der DE-A 3528598 wird ein Verfahren zur Reinigung eines aus einem Hochtemperaturprozess stammenden, Ruß enthaltenden Abwasserstromes offenbart. Hierbei wird dem Abwasser ein Zuschlagstoff wie Calciumcarbonat oder Kalkhydrat in beachtlichen Mengen zugegeben (2 bis 10 kg/m³), anschließend ein Flockungsmittel zugeführt und unmittelbar danach das so vorbehandelte Abwasser einer Filtration unterworfen, wobei einer Schwerkraftfiltration eine Druckfiltration folgt (Anspruch 1). In Bezug auf die Reinigung eines Ruß enthaltenden Abwasserstromes aus der Acetylenherstellung erweist sich dieses Verfahren jedoch als nachteilig. So sind für die zweistufige Filtration aufwändige Apparate wie ein Bandfilter erforderlich, welche neben hohen Anschaffungskosten auch vermehrten Aufwand hinsichtlich Wartung und Energiebedarf erfordern. Das Konzept der unmittelbar verknüpften zweistufigen Filtration führt weiterhin zu dem Nachteil, dass im Falle eines schwankenden Anfalls an zu reinigendem Abwasser oder bei Engpässen an einer Verfahrensstufe hier nicht flexibel reagiert werden kann, die Möglichkeit einer Pufferung und Entkopplung dieser Verfahrensschritte wäre wünschenswert. Hierbei kommt erschwerend hinzu, dass der aus der Schwerkraftfiltration gewonnene Filterkuchen wegen des erhöhten Feststoffgehalts bereits nur noch schwer handhabbar ist, wobei die Effektivität des Verfahrens dadurch weiter eingeschränkt wird, dass dieser Filterkuchen in seiner Konzentration an Ruß durch die zusätzlich beigefügten festen Zuschlagstoffe wie Calciumcarbonat verringert wird. Weiterhin ist es von Nachteil, dass die Menge an zu entsorgendem Filterkuchen durch die zusätzlich beigefügten Zugschlagstoffe wie Calciumcarbonat erhöht wird. Dies führt zu höherem apparativen Aufwand um die Zuschlagstoffe zu lagern (Vorratsbehälter) und zu dosieren (Regelung der Dosiermengen).

Es stellte sich somit die Aufgabe, ein verbessertes Verfahren zur Reinigung eines Ruß enthaltenden Abwasserstromes, welcher bei der Herstellung von Acetylen anfällt, wobei der Ruß in fein verteiltem Zustand im Abwasser vorliegt zu finden, welches die genannten Nachteile vermeidet und das eine Abtrennung des Rußes in effektiver und verfahrenstechnisch einfacher Art und Weise bei hoher Betriebssicherheit ermöglicht, wobei flexibel auf schwankende Betriebsbedingungen reagiert werden kann. Hierbei soll ein fester Rückstand erhalten werden, welcher sowohl durch Verbrennung als auch Deponierung entsorgt werden kann.

Demgemäß wurde ein Verfahren zur Reinigung eines Ruß enthaltenden Abwasserstromes, welcher bei der Herstellung, von Acetylen anfällt, wobei der Ruß in fein verteiltem Zustand im Abwasser vorliegt gefunden, welches dadurch gekennzeichnet ist, dass man zur Abtrennung des Rußes, das Abwasser einer Feststoffaufkonzentrierung durch Sedimentation unterwirft und anschließend den bei der Sedimentation erhaltenen Rußschlamm durch eine Druckfiltration weiter entwässert.

Die erfindungsgemäße Aufkonzentrierung des Rußwassers erfolgt durch Schwerkraft in handelsüblichen Sedimentationsbehältern z. B. Eindickern oder Lamellenklärern. Durch die Eindickung werden Rußschlämme mit Feststoffkonzentrationen im Bereich von 1 bis 4 Gew.-%, bevorzugt 2 bis 3 Gew.-% erreicht. Der durch die Sedimentation erhaltene Rußschlamm kann vorteilhafterweise mit einer Verdrängerpumpe, bevorzugt einer Exzenterschneckenpumpe gefördert werden. Vorteil dieser erfindungsgemäßen Ausgestaltung ist, dass die Sedimentationseinrichtung und die Druckfiltration räumlich getrennt aufgestellt werden können. Außerdem kann der Sedimentationsbehälter bei entsprechender Dimensionierung gleichzeitig als Rußschlammpuffer dienen. Die notwendige Klärfläche des Sedimentationsbehälters ist von der im Abwasser enthaltenen Rußkonzentration und vom Volumenstrom abhängig. Die auf die Klärfläche bezogene Beschickung liegt üblicherweise im Bereich von 0,5 bis 5 m³/m²*h, bevorzugt 0,5 bis 3 m³/m²*h. Hydraulische Verweilzeiten von 1 bis 2 Stunden sollten eingehalten werden. Der Sedimentationsbehälter besteht in der Regel aus einem zylindrischen und einem unteren konischen Teil der den Rußschlammaustrag begünstigt. Der Winkel des Konus liegt dabei im Bereich von 70° bis 100°, bevorzugt 90°.

Das Verhältnis von Durchmesser zu Höhe liegt im Bereich von 1 : 1 bis 1 : 3, bevorzugt 1 : 1 bis 1 : 1,5.

Dadurch kann flexibel auf schwankende Feststofffrachten reagiert werden, eine diskontinuierlich arbeitende Druckfiltration eingesetzt werden und Wartungsarbeiten in den nachfolgenden Verfahrensstufen bei gleichzeitig weiter laufendem Rußwasseranfall durchgeführt werden, wodurch die Effektivität des erfindungsgemäßen Verfahrens deutlich gesteigert wird.

Der bei der Sedimentation gewonnene Rußschlamm wird anschließend in einer Entwässerungsvorrichtung einer Druckfiltration unterworfen. Bevorzugt erfolgt der Transport des Rußschlammes von der Sedimentationsstufe zur Druckfiltrationsstufe mittels einer Verdrängerpumpe. Als Entwässerungsvorrichtung für die Durchführung der Druckfiltration empfehlen sich diskontinuierlich betriebene Apparate wie Kammerfilterpressen, Membranfilterpressen oder kontinuierlich betriebene Siebbandpressen.

Zur Verbesserung der Entwässerung kann in den Rußschlamm zusätzlich ein Flockungsmittel (FM) eingemischt werden. Die bevorzugten Flockungsmittelmengen liegen im Bereich von 0,5 bis 5 g/kg Feststoff. Die Zudosierung des Flockungsmittels erfolgt bevorzugt in Form einer Lösung, dies kann beispielsweise vor der Beschickungspumpe vor der Entwässerungsvorrichtung oder bevorzugt nach der Beschickungspumpe unmittelbar vor der Entwässerungsvorrichtung erfolgen. Hierzu empfiehlt sich eine Mischeinrichtung wie sie z.B. in der EP 0710625 B1 beschrieben ist, um eine gut entwässerbare, geflockte Suspension zu erhalten.

Als organische Flockungsmittel können handelsübliche Marken eingesetzt werden. Hierbei handelt es sich um wasserlösliche Verbindungen auf Acrylamid oder Acrylsäurebasis. Bei dem erfindungsgemäßen Verfahren erwiesen sich anionische Flockungsmittel als besonders geeignet. Die erforderlichen Flockungsmittelmengen liegen im Bereich von 1 bis 10 g Wirkstoff/kg Ruß. Die FM werden bevorzugt als wässrige Lösungen mit Konzentrationen von 0,05 bis 0,2 % eingesetzt. Die Zudosierung der FM-Lösung vor der erfindungsgemäßen Sedimentation kann direkt in die Rußwasserleitung erfolgen. Eine sehr gute Einmischung kann entweder durch einen statischen Mischer oder einen separaten Rührbehälter erfolgen.

Als Beschickungspumpen haben sich besonders Exzenterschneckenpumpen (Kolbenmembranpumpe, Druckluftmembranpumpe) bewährt. Pumpen wie z.B. Kreiselpumpen, bei denen in der Flüssigkeit hohe Scherkräfte auftreten, sind nicht geeignet. Der Abscheidegrad auf Kammerfilterpressen liegt bei mindestens 95 % des abzutrennenden Rußes. Bei Siebbandpressen können 90 % erreicht werden. Mit Rußpartikeln belastetes Filtrat kann zur weiteren Klärung in die Sedimantationsstufe zurückgeführt werden.

Die erhaltenen Filterkuchen sind fest und stückig und haben Feststoffgehalte von 20 bis 30 Gew.-%, bevorzugt 23-25 Gew.-%. Die Konsistenz der Filterkuchen entspricht den Anforderungen der Deponien. Die Entsorgung der anfallenden Filterkuchen in einer entsprechenden Verbrennungsanlage ist durch deren Energieinhalt (Heizwert) oft die wirtschaftlichere Lösung.

Eine weitere Aufgabe der Erfindung bestand darin, aufschwimmenden Ruß durch eine Vorbehandlung im Abwasser vollständig zu dispergieren.
Außerdem sollte die Möglichkeit bestehen, im Verfahren gelöste Kohlenwasserstoffe aus dem Rußwasser weitgehend zu entfernen.

Rußfraktionen, die aufgrund ihrer chemischen oder physikalischen Eigenschaften auf der Wasseroberfläche aufschwimmen, werden bevorzugt vor der Sedimentation durch den Einsatz eines geeigneten Tensids suspendiert, um eine möglichst vollständige Abscheidung der Rußfeststoffe im Sedimentationsbehälter zu erreichen. Es handelt sich hierbei um wasserlösliche makromolekulare Verbindungen, die durch Alkoxylierung überwiegend linearer Fettalkohole hergestellt werden und welche als oberflächenaktive Substanzen die Benetzbarkeit der Rußpartikel verbessern. Bei dem erfindungsgemäßen Verfahren erwiesen sich nichtionische Produkte als besonders geeignet, die gute Netzeigenschaften gegenüber hydrophober Stoffe aufweisen. Um den Betrieb der nachfolgenden Verfahrensstufen nicht zu beeinträchtigen, sollte das Tensid eine möglichst geringe Schaumneigung besitzen. Die empfehlenswerten Tensidmengen liegen im Bereich von 1 bis 10 g/kg Ruß. Die Zudosierung des Tensids vor der Sedimentation kann direkt in die Rußwasserleitung erfolgen. Eine sehr gute Einmischung erfolgt entweder durch eine Pumpe, einen statischen Mischer oder einen separaten Rührbehälter. Sollte der durch die Zugabe von Tensiden entstehende Schaum den Betrieb des erfindungsgemäßen Verfahrens stören (bei der Sedimentation oder der Pumpe), kann die Schaumbildung mit Hilfe von dem Fachmann bekannten Entschäumern wirkungsvoll reduziert werden.

Im Abwasserstrom enthaltene adsorbierbare organische Kohlenwasserstoffe können bei Bedarf durch Zugabe von Aktivkohle (AK) vor der Sedimentation vorteilhafterweise reduziert werden. Die gelösten organischen Verbindungen adsorbieren an der Aktivkohle. Die Aktivkohle wird gemeinsam mit dem Ruß in der Druckfiltrationsstufe aus dem Abwasser eliminiert. Als Aktivkohledosierung hat sich eine Menge von 5 bis 15 g AK/g DOC (Dissolved Organic Carbon) als günstig erwiesen. Der genaue Bedarf an Aktivkohle im jeweiligen Fall kann vom Fachmann durch Aufnahme einer Adsorptionsisotherme ermittelt werden. Die Aktivkohle wird dem Rußwasser bevorzugt als wässrige Suspension in einer Konzentration von etwa 10 bis 20 Gew.-% in einem Rührbehälter beigemischt.

Um die Filtrationseigenschaften des Rußschlammes bei der Druckfiltration zu verbessern (Erhöhung der Filterflächenbelastung; Erreichbarkeit eines Mindesttrockensubstanzgehaltes im Filterkuchen) kann dem Rußwasser ein Filtrationshilfsmittel zugesetzt werden. Für diesen Zweck eignen sich insbesondere anorganische Stoffe, z.B. Asche aus einer Verbrennungsanlage. Die notwendigen Konditioniermengen liegen im Bereich von 0,1 bis 1 kg Hilfsstoff / kg Ruß. Die Zugabe dieses Filtrationshilfsmittels kann vor der Sedimentation oder vor der Druckfiltration erfolgen.

Das erfindungsgemäße Verfahren bietet eine effektive und verfahrenstechnisch einfache Art der Reinigung eines aus der Acetylenherstellung stammenden, Ruß beladenen Abwasserstromes. Bei geringem apparativem Aufwand wird hierbei eine Abtrennung des Rußes ermöglicht, wobei zusätzlich flexibel auf schwankende Betriebsbedingungen reagiert werden kann, was die Effektivität des erfindungsgemäßen Verfahrens noch steigert.

### Beispiele

Bei dem nachfolgenden Beispiel wurden rußbelastete Abwässer mit einer Feststoffkonzentration von 1 bis 2 g/l feinst verteiltem Feststoff aus einem Acetylenprozess eingesetzt.

### Beispiel 1

20 m³ Rußwasser werden mit einem Volumenstrom von 1 m³/h einem Technikumseindicker mit einem Durchmesser von 1,3 m zugeführt. Zur Flockung des Ruß-Feststoffs wird in die Zuleitung ein anionisches Flockungsmittel zudosiert und mit einem statischen Mischer eingemischt. Die Dosierung des Flockungsmittels beträgt 0,7 kg/t Feststoff. Im Eindicker erfolgt die Sedimentation und Aufkonzentrierung des Rußwassers auf eine Feststoffkonzentration von 25 g/l (2,5 Gew.-%). Der anfallende Rußschlamm (Sediment) wird anschließend auf einer Kammerfilterpresse mit 10 Kammern mit Abmessungen von 400 x 400 x 30 mm entwässert. Das Material der Filtertücher besteht aus Polypropylen mit einer Luftdurchlässigkeit von 20 I/dm²/min. Als Beschickungspumpe wird eine drehzahlgeregelte Exzenterschneckenpumpe verwendet. Zur Verbesserung der Entwässerungseigenschaften wird nach der Beschickungspumpe Flockungsmittel in die Rohrleitung zugegeben und über einen selbstregelnden Mischer (EP 0710625 B1) eingemischt. Die Dosierung an Flockungsmittel beträgt hier 1,8 kg/t Feststoff. Der Anfangsvolumenstrom auf die Kammerfilterpresse beträgt 250 I/h. Nach 1 Stunde wird ein Filtrationsdruck von 16 bar erreicht, der noch ca. 1 Stunde über eine entsprechende Regelung der Beschickungspumpe konstant gehalten wird. Nach einer gesamten Filtrationszeit von ca. 2 Stunden ist die Filtration beendet und der Filterkuchen wird aus der Kammerfilterpresse entnommen. Der erhaltene stichfeste Filterkuchen hat einen Feststoffgehalt von 24 % und löst sich sehr gut von den Filtertüchern ab. Der untere Heizwert des Filterkuchens lag bei 4560 kJ/kg, so dass er sich gut verbrennen lässt.

### Beispiel 2

Bei dem nachfolgenden Beispiel wurde rußbelastetes Abwasser mit feinst verteiltem Feststoff aus einem Acetylenprozess eingesetzt. Nach kurzer Standzeit der Probe schwamm der Ruß vollständig auf und bildete auf der Flüssigkeitsoberfläche eine 1 bis 2 cm hohe Rußschicht. Die Wasserphase war weitestgehend klar. In eine Rußwasserprobe von 1 I wurde eine Menge von 40 mg anionisches Tensid in Handelsform eingemischt. Die Einmischung erfolgte über 2 Minuten mit Hilfe eines Magnetrührers. Das Tensid zeigte eine ausgeprägte Netz- und Dispergierwirkung, so dass der Ruß nach der Behandlung vollständig suspendiert war. Der gebildete Schaum war nicht stabil. Die anfängliche Schaumhöhe von ca. 15 mm reduzierte sich nach 30 Sekunden auf weniger als 1 mm. Nach ca. 2 Minuten war der Schaum fast vollständig zerfallen und eine Reinigung nach dem erfindungsgemäßen Verfahren möglich.

## Patentansprüche

1. Verfahren zur Reinigung eines Ruß enthaltenden Abwasserstromes, welcher bei der Herstellung von Acetylen anfällt, wobei der Ruß in fein verteiltem Zustand im Abwasser vorliegt, **dadurch gekennzeichnet, dass** man zur Abtrennung des Rußes
a. das Abwasser einer Feststoffaufkonzentrierung durch Sedimentation unterwirft und anschließend
b. den bei der Sedimentation erhaltenen Rußschlamm durch eine Druckfiltration weiter entwässert.

2. Verfahren nach Anspruch 1, **dadurch gekennzeichnet, dass** man dem Abwasser unmittelbar vor der Sedimentation eine wässrige Lösung enthaltend organischen Flockungsmittel, bevorzugt anionische Flockungsmittel, zuleitet.

3. Verfahren nach Ansprüchen 1 oder 2, **dadurch gekennzeichnet, dass** man dem Abwasser vor der Sedimentation Tenside zur Verbesserung der Benetzbarkeit von aufschwimmenden Rußpartikeln zusetzt.

4. Verfahren nach Ansprüchen 1 bis 3, **dadurch gekennzeichnet, dass** man dem Abwasser vor der Sedimentation Aktivkohle zur Adsorption von im Abwasser gelösten organischen Stoffen zusetzt.

5. Verfahren nach Anspruch 3, **dadurch gekennzeichnet, dass** man dem Abwasser Entschäumer zusetzt.

6. Verfahren nach Anspruch 1, **dadurch gekennzeichnet, dass** man in den Rußschlamm unmittelbar vor der Druckfiltration eine wässrige Lösung enthaltend organischen Flockungsmittel, bevorzugt anionische Flockungsmittel, einmischt.

7. Verfahren nach Ansprüchen 1 bis 6, **dadurch gekennzeichnet, dass** man dem Ruß enthaltenden Abwasserstrom einen suspendierten Feststoff als Filterhilfsmittel zusetzt.

8. Verfahren nach Ansprüchen 1 bis 7, **dadurch gekennzeichnet, dass** man den bei der Sedimentation gewonnenen Rußschlamm mittels einer Verdrängerpumpe der Vorrichtung zur Druckfiltration zuleitet.

9. Verfahren nach Anspruch 8, **dadurch gekennzeichnet, dass** man den bei der Sedimentation gewonnenen Rußschlamm mittels einer Exzenterschneckenpumpe der Vorrichtung zur Druckfiltration zuleitet.

## Claims

1. A process for cleaning a wastewater stream which comprises soot and is obtained in the preparation of acetylene, the soot being present in finely divided form in the wastewater, which comprises removing the soot by
a. subjecting the wastewater to a solid concentration by sedimentation and then
b. further dewatering the soot sludge obtained in the sedimentation by a pressure filtration.

2. The process according to claim 1, wherein an aqueous solution comprising organic flocculant, preferably anionic flocculant, is fed to the wastewater immediately upstream of the sedimentation.

3. The process according to claims 1 and 2, wherein surfactants are added to the wastewater upstream of the sedimentation to improve the wettability of floating soot particles.

4. The process according to claims 1 to 3, wherein activated carbon is added to the wastewater upstream of the sedimentation to adsorb organic substances dissolved in the wastewater.

5. The process according to claim 3, wherein defoamers are added to the wastewater.

6. The process according to claim 1, wherein an aqueous solution comprising organic flocculant, preferably anionic flocculant, is mixed into the soot sludge immediately upstream of the pressure filtration.

7. The process according to claims 1 to 6, wherein a suspended solid is added as a filtering aid to the soot-comprising wastewater stream.

8. The process according to claims 1 to 7, wherein the soot sludge obtained in the sedimentation is fed to the apparatus for pressure filtration by means of a positive displacement pump.

9. The process according to claim 8, wherein the soot sludge obtained in the sedimentation is fed to the apparatus for pressure filtration by means of an eccentric screw pump.

## Revendications

1. Procédé de purification d'un courant d'eau usée contenant de la suie, qui se forme lors de la fabrication d'acétylène, la suie étant présente à un état finement divisé dans l'eau usée, **caractérisé en ce que** pour séparer la suie,
a. l'eau usée est soumise à une concentration des solides par sédimentation, puis
b. la pâte de suie obtenue lors de la sédimentation est davantage déshydratée par une filtration sous pression.

2. Procédé selon la revendication 1, **caractérisé en ce qu'**une solution aqueuse contenant des agents de floculation organiques, de préférence des agents de floculation anioniques, est introduite dans l'eau usée immédiatement avant la sédimentation.

3. Procédé selon la revendication 1 ou 2, **caractérisé en ce que** des tensioactifs sont ajoutés à l'eau usée avant la sédimentation pour améliorer la mouillabilité des particules de suie flottantes.

4. Procédé selon les revendications 1 à 3, **caractérisé en ce que** du charbon actif est ajouté à l'eau usée avant la sédimentation pour adsorber les substances organiques dissoutes dans l'eau usée.

5. Procédé selon la revendication 3, **caractérisé en ce que** des agents antimousses sont ajoutés à l'eau usée.

6. Procédé selon la revendication 1, **caractérisé en ce qu'**une solution aqueuse contenant des agents de floculation organiques, de préférence des agents de floculation anioniques, est incorporée dans la pâte de suie immédiatement avant la filtration sous pression.

7. Procédé selon les revendications 1 à 6, **caractérisé en ce qu'**un solide en suspension est ajouté au courant d'eau usée contenant de la suie en tant qu'adjuvant de filtration.

8. Procédé selon les revendications 1 à 7, **caractérisé en ce** la pâte de suie obtenue lors de la sédimentation est introduite dans le dispositif de filtration sous pression par une pompe volumétrique.

9. Procédé selon la revendication 8, **caractérisé en ce que** la pâte de suie obtenue lors de la sédimentation est introduite dans le dispositif de filtration sous pression par une pompe à vis excentrée.
